# EUROPEAN PATENT APPLICATION

(11) **EP 4 570 664 A1**
(43) Date of publication of application: **18.06.2025**
(21) Application number: 24162642.3
(22) Date of filing: 11.03.2024
(51) Int. Cl.: B64D 13/06

(54) **AIRCRAFT CABIN AIR VENTILATION SYSTEM WITH IMPROVED VENTILATION**

(30) Priority: 14.12.2023 IN 202311085364
(71) Applicant: Airbus Operations GmbH, 21129 Hamburg (DE)
(72) Inventor: Komarla, Sasank, Bangalore (IN)
(74) Representative: Schornack, Oliver

(57) **Abstract**

The present disclosure relates to a cabin air ventilation system (100) for an aircraft cabin (10) comprising a riser duct (50) configured to conduct fresh air to the aircraft cabin (10), and an air outlet (101, 102) connected to the riser duct (50). The air outlet (101, 102) comprises an inlet fluidly connected to the riser duct, a main body having an outlet opening, and a plurality of vanes arranged in the outlet opening, wherein a first number of vanes is oriented in a first direction and a second number of vanes is oriented in a second direction forming an angle with the first direction. Further disclosed are an aircraft section and an aircraft having such cabin air ventilation system.

## Description

The present disclosure generally relates to a cabin air ventilation system, an aircraft section having such ventilation system associated with seat rows, and a corresponding aircraft. Particularly, the present disclosure relates to a cabin air ventilation system with a plurality of vanes in an air outlet, wherein some of the vanes are oriented in a different direction than the remaining vanes. The present disclosure further relates to an aircraft section with such a cabin air ventilation system and seat rows spatially arranged in relationship to the ventilation system, and a corresponding aircraft having such ventilation system and/or aircraft section.

A conventional aircraft is equipped with an air ventilation system that provides general air supply into an aircraft cabin, such as a lateral air outlet (LAO) and a ceiling air outlet (CAO), as well as individual nozzles in a personal service unit (PSU). While the personal service units (PSU) are arranged above and in association with the seat rows in the aircraft, the LAO and CAO respectively provide air supply in a lateral region of the aircraft cabin, e.g., above the windows in a region of overhead storage compartments, and in a ceiling region of the aircraft cabin.

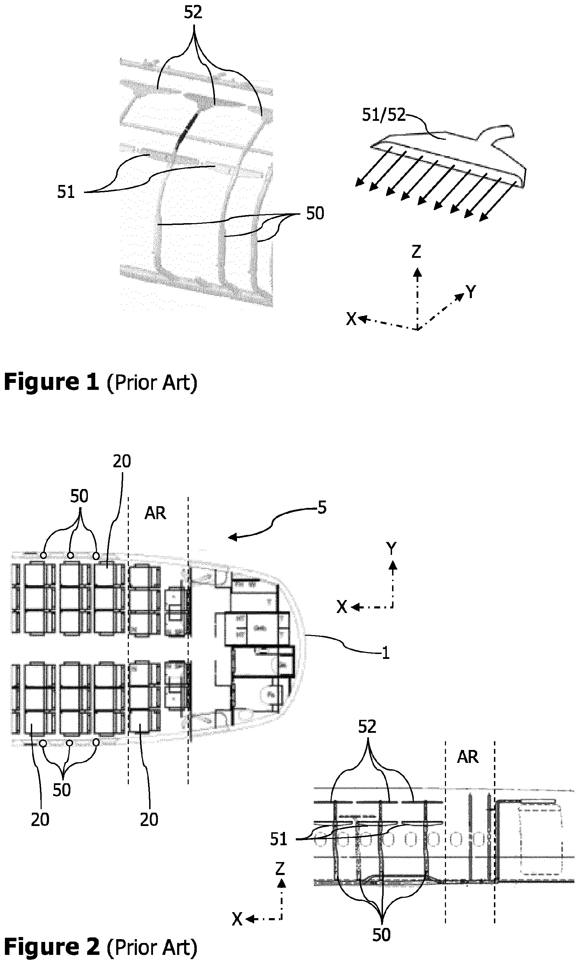

Figure 1 schematically illustrates a portion of a conventional ventilation system comprising riser ducts 50 (for example connected to a main air supply duct in a floor region). Such riser ducts 50 can be arranged between an outer skin of the aircraft and an inner lining of the aircraft cabin. Thus, the riser ducts 50 are arranged in the vicinity of and/or parallel to a frame of the primary structure of the aircraft. Connected to such riser ducts 50 are lateral air outlets, LAO 51 and ceiling air outlets, CAO 52. As a mere example, one LAO 51 and one CAO 52 can be fluidly coupled to the same riser duct 50.

As illustrated in the detailed drawing of Figure 1, each of the LAO 51 and CAO 52 are configured to generate a straight stream of air supplied by the riser duct 50. By arranging a plurality of LAOs 51 and CAOs 52 next to one another in a longitudinal direction of the aircraft (X-axis) the straight air stream (along the Y-axis) is provided along the entire aircraft (in an X-Y-plane). For instance, a width of each LAO 51 and CAO 52 can be substantially the same as the distance between two adjacent riser ducts 50 (viewing in the X-axis (longitudinal) direction), so that adjacent LAOs 51 and adjacent CAOs 52 can abut against one another or are at least very close to one another. Thus, the entire aircraft cabin can be supplied with fresh air, which will stream from the lateral side of the aircraft cabin and the ceiling region to a centre of the aircraft cabin. Since usually air is removed from the aircraft cabin at so-called Dado-panels arranged at a sidewall and floor of the aircraft cabin, the air supply circulates through the aircraft cabin substantially in a cross-sectional plane (Y-Z-axes).

Indeed, this ensures ventilation of each part of the aircraft section having LAOs 51 and CAOs 52. However, some areas of the aircraft cabin may require a different ventilation scheme.

It is therefore an object of the present disclosure to provide an improved air ventilation system that provides an optimised supply of fresh air throughout the aircraft cabin.

This object is solved by the present invention as defined in the independent claims. Preferred embodiments are defined by the dependent claims.

According to a first aspect to better understand the present disclosure, a cabin air ventilation system for a plurality of seat rows in an aircraft cabin comprises a riser duct arranged along a lateral side of the aircraft cabin and configured to conduct fresh air to the aircraft cabin, and an air outlet connected to an upper end of the riser duct and distributing the conducted air from the riser duct in an area associated with the riser duct.

Besides such rather conventional combination of riser duct and air outlet, the air outlet of the present disclosure comprises an inlet fluidly connected to the riser duct, a main body extending from the inlet and having an outlet opening with a larger cross-section than the inlet, and a plurality of vanes arranged in the outlet opening, wherein a first number of vanes of the plurality of vanes is oriented in a first direction and a second number of vanes of the plurality of vanes is oriented in a second direction forming an angle with the first direction.

This allows a distribution of the air provided by the riser duct into areas of the aircraft cabin that differ from the cross-sectional plane (Y-Z-axes). Particularly, by arranging some of the plurality of vanes in a different direction, an air stream along this direction can be achieved. This allows a distribution of the fresh air from the riser duct in an area smaller or larger than an area provided with fresh air in conventional ventilation systems.

It is to be understood that "fresh air" to be distributed in the aircraft cabin can include or be recirculated air, i.e. a mixture of air taken from the ambient environment of the aircraft and air removed from the aircraft cabin.

Furthermore, the air outlet can be a lateral air outlet (LAO) or a ceiling air outlet (CAO), so that conventional riser ducts and conventional LAOs and CAOs can be employed, but being additionally equipped with the plurality of vanes as disclosed herein.

In an implementation variant, the air outlet can further comprise an actuator configured to move the second number of vanes to change the second direction. Thus, the second direction (into which a portion of the air provided by the riser duct can be guided) can be actively modified. Although it is possible that the actuator can move the second number of vanes in a manner that the second number of vanes point in the first direction, the actuator is configured to move the second number of vanes in directions deviating from the first direction, so that the second direction forms an angle with the first direction.

In another implementation variant, the air outlet can further comprise a coupling rod connected to the actuator, wherein the actuator moves the coupling rod.

Furthermore, the air outlet can comprise connecting means pivotally connecting the coupling rod to each of the second number of vanes, wherein the connecting means translate a back and forth movement of the coupling rod into a pivotal movement of the second number of vanes.

As a mere example, the connecting means can be or at least include hinges between the coupling rod and each of the second number of vanes. In addition, each of the second number of vanes can be pivotally mounted to the main body of the air outlet having a different axis of rotation than the connecting means. Thus, moving the coupling rod back and forth allows a rotational movement of each of the second number of vanes around their respective axis of rotation, while the coupling rod likewise performs a rotating movement relative to the second number of vanes.

It is to be understood that more than one coupling rod can be provided, and each of the second number of vanes can be supported in a manner allowing a three-dimensional (rotational) movement. Thus, each of the second number of vanes cannot only change position rotationally (in a plane), but can change position three-dimensionally.

In an implementation variant, the plurality of vanes can form a baffle, a wave, a cylinder, and/or a cuboid. In other words, each of the plurality of vanes can be a sheet-like element (straight or curved in wave-form) or a three-dimensional object. In any case, each vane has at least one surface, along which an air stream of air supplied by the riser duct streams. This at least one surface is oriented in the second direction, so that at least a portion of the air stream is guided/directed into the second direction.

According to a second aspect to better understand the present disclosure, an aircraft section comprises a cabin air ventilation system of the first aspect or one or more of its variants.

In an implementation variant, the aircraft section can further comprise at least one first seat row arranged in an area of the aircraft section where the riser duct (of the cabin air ventilation system) is installed, and at least one second seat row arranged in an area of the aircraft section without a riser duct and adjacent to the first seat row. Thus, the aircraft section can be arranged in an area of the aircraft that was not intended to have a conventional fresh air supply via LAOs and/or CAOs.

In an implementation variant, the first direction can point to the first seat row and the second direction can point to the second seat row. Thus, the air outlet of the cabin air ventilation system is arranged in such a manner in the aircraft section that a conventionally not ventilated area or only indirectly ventilated area can be provided with fresh air via the second number of vanes directing/guiding air from the riser duct towards the second seat row. This increases comfort of passengers sitting in this area.

In an implementation variant, the aircraft section can further comprise a temperature sensor configured to measure an air temperature in the aircraft section. The first direction and/or the second direction can point away from the temperature sensor.

As a mere example, the temperature sensor can be arranged in an area of an overhead stowage compartment, i.e., an area close to a LAO and/or CAO, such as the air outlet of the cabin air ventilation system. For instance, the temperature sensor can be arranged on top of an overhead stowage compartment, between two adjacent overhead stowage compartments, behind a lining (sidewall and/or ceiling lining) of the aircraft cabin or a similar area of the aircraft cabin.

On the one hand, an air stream output by the air outlet close to the temperature sensor can create or can be caught by a swirl that touches or roams the temperature sensor. On the other hand, an air stream output by the air outlet on a lateral opposite side of the temperature sensor can flow (e.g., by the first plurality of vanes oriented in the first direction) directly towards the temperature sensor. Thus, the fresh air supplied to the aircraft section, which is usually colder than the desired air temperature, may be directed to the temperature sensor in a "short circuit" (swirl) and/or over only a short distance (opposite arrangement). Thus, the measured temperature may not reflect the actual temperature in the aircraft section.

By arranging the first and/or second number of vanes in a manner pointing away from the temperature sensor, the accuracy of the measurement of the temperature can be increased, as a direct hit of cold air onto the temperature sensor can be avoided.

In an implementation variant, the first or second direction can be substantially perpendicular to a longitudinal direction of the aircraft section and a vertical direction. The longitudinal direction of the aircraft section corresponds to the longitudinal direction of the aircraft, such as the X-axis direction of the aircraft from nose to tail. The vertical direction is perpendicular thereto, such as a Z-axis direction.

According to a third aspect to better understand the present disclosure, an aircraft comprises at least one cabin air ventilation system of the first aspect or one or more of its variants.

Alternatively or additionally, the aircraft can comprise at least one aircraft section of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a portion of a conventional ventilation system of an aircraft;
- Figure 2: schematically illustrates a conventional aircraft section in a plan view and a partial side view;
- Figure 3: schematically illustrates a plan view of an aircraft section, according to the present disclosure;
- Figure 4: schematically illustrates a perspective view and a top view of an air outlet;
- Figure 5: schematically illustrates a plurality of vanes of an air outlet;
- Figure 6: schematically illustrates an air outlet;
- Figure 7: schematically illustrates an interior side view of an aircraft section; and
- Figure 8: schematically illustrates exemplary configurations of air outlets having a plurality of vanes.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figures 1 and 2 schematically illustrate a portion of a conventional ventilation system of an aircraft 1, and a conventional aircraft section 5 in a plan view and partial side view. Specifically, riser ducts 50 may have a lateral and/or ceiling air outlet 51, 52 connected thereto, so that air is distributed/vented in the aircraft section 5. For instance, a plurality of seat rows 20 may be provided in the aircraft section 5, wherein the air outlets 51, 52 are arranged above the seat rows 20 at a sidewall (in case of lateral air outlet 51) and a ceiling (in case of ceiling air outlet 52). The riser ducts 50 may be provided behind a sidewall lining of the aircraft cabin 10, i.e., close to the aircraft outer skin (cf. Figure 2).

The conventional LAO 51 and CAO 52 as illustrated in Figure 1 provides a uniform air flow substantially perpendicularly from the outlet opening of the LAO 51 and CAO 52, i.e., in the Y-axis direction substantially perpendicular to the longitudinal direction (X-axis) of the aircraft 1. Such uniform and substantially perpendicular airflow is desired, as the width of each LAO 51 and CAO 52 is approximately as wide as the distance between two adjacent riser ducts 50. In other words, a row of LAOs 51 and a row of CAOs 52 are formed, which respectively provide a continuous air flow along the longitudinal direction of the aircraft 1.

As can be derived from Figure 2, in the back of the aircraft (aft section), the riser ducts 50 may not be present, since such areas are usually used for monuments, such as galleys or toilets, which would block an LAO 51 or CAO 52. However, in order to maximise the number of passengers in an aircraft, additional seat rows 20 may be provided in such area indicated as "AR" (for "additional rows") in Figure 2.

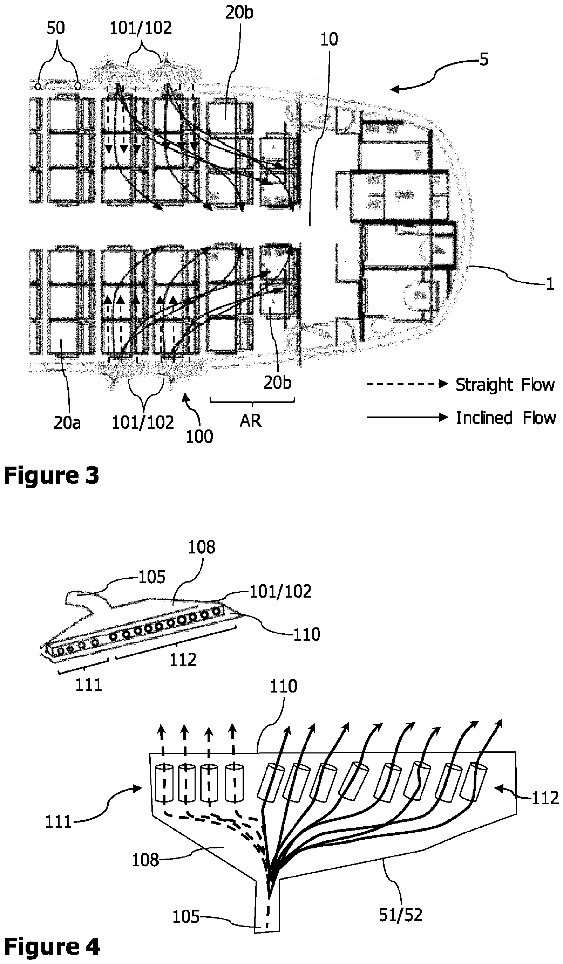

Figure 3 schematically illustrates a plan view of an aircraft section 5, according to the present disclosure, where additional seat rows 20b are provided in the area AR. Thus, at least one first seat row 20a is arranged in an area of the aircraft section 5 where the riser ducts 50 are installed. The passengers sitting in this first seat row 20a will experience the supply of fresh air through one or more lateral air outlets 101 and/or one or more ceiling air outlets 102. It is to be understood that the LAO 101 and the CAO 102 can be connected to a riser duct 50 and can be arranged in the same manner as LAO 51 and CAO 52 illustrated in Figure 1. Thus, their detailed description is not repeated.

The at least one second seat row 20b, however, are arranged in an area AR of the aircraft section 10 without a riser duct 50, and hence without dedicated LAO 101 and/or CAO 102. In order to avoid a reduced supply of fresh air to passengers sitting in the at least one second seat row 20b, a cabin air ventilation system 100 of the present disclosure is provided in the aircraft cabin 10. Specifically, such cabin air ventilation system 100 comprises a riser duct 50 and one or more air outlets 101, 102 connected to (an upper end of) the riser duct 50.

With respect to Figure 4 schematically illustrating a perspective view and a top view of an air outlet 101, 102, such LAO 101 and/or CAO 102 comprises an inlet 105 connected to the riser duct 50, and a main body 108 extending from the inlet and having an outlet opening 110 with a larger cross-section than the inlet 105. Moreover, a plurality of vanes 111, 112 is arranged in the outlet opening 110. A first number of vanes 111 is oriented in a first direction and a second number of vanes is oriented in a second direction forming an angle with respect to the first direction. As a mere example, the first number of vanes 111 (4 vanes in Figure 4) can be oriented substantially perpendicular to a longitudinal direction, i.e. can be oriented in the Y-axis direction. Thus, these vanes 111 form a straight airflow as illustrated in Figure 3 by dashed arrows. This straight airflow allows providing fresh air from the riser duct 50 to the first seat row(s) 20a.

The second number of vanes 112 (8 in Figure 4) can be oriented in a different direction, so that an inclined air flow is created, illustrated by solid arrows in Figure 3. Such vanes 112 can be oriented towards the second seat row(s) 20b, so that passengers sitting in this area AR are provided with fresh air, too. Due to the inclined air flow, a better mixture of air in the area comprising the first and second seat rows 20a, 20b can be achieved, so that the overall quality of the air in this area is increased.

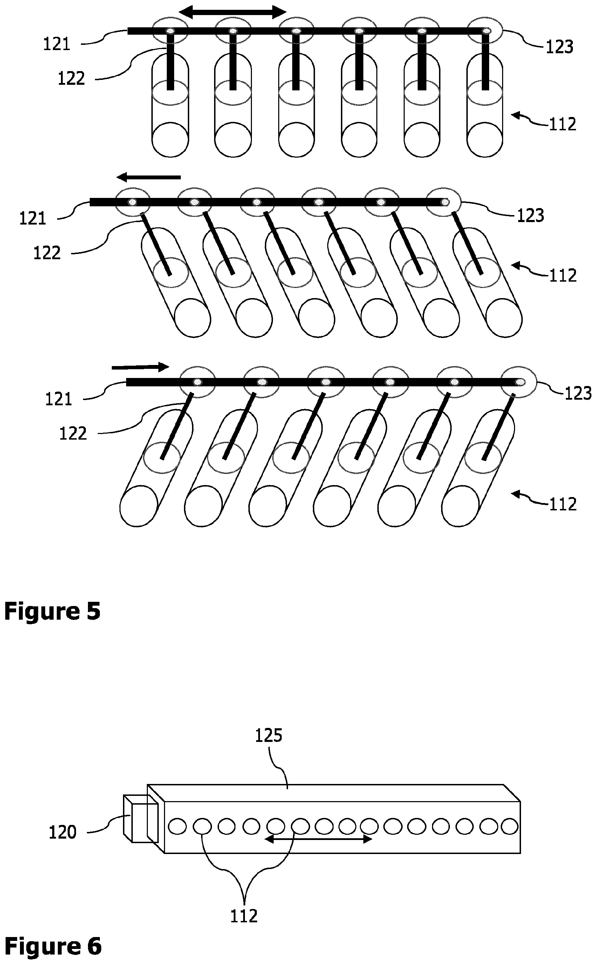

Figure 5 schematically illustrates a plurality of vanes 112 of an air outlet 101, 102, particularly a second number of vanes 112. Specifically, while the second vanes 112 may be fixedly arranged in the air outlet opening 110, the position of the second vanes 112 may, alternatively, be controlled. Furthermore, Figure 6 schematically illustrates a vane control device 125, which can be installed in the air outlet opening 110. Thus, the vanes 111, 112 of the present disclosure can be retrofitted into existing LAOs 51/101 and CAOs 52/102.

An actuator 120 can be provided that is configured to move the second number of vanes 112 to change the second direction. Figure 5 exemplarily illustrates three states of the second number of vanes 112. In the upper state the vanes 112 are directed substantially perpendicular to the air outlet opening 110 (and hence substantially perpendicular to the longitudinal direction of the aircraft 1), in the middle state, the vanes 112 are swung to the right, while in the lower state the vanes 112 are swung to the left.

Such movement and change of the second direction can be achieved by providing a coupling rod 121 connected to the actuator 112, wherein the actuator 112 move the coupling rod 121, for example back and forth as illustrated by the arrows shown in Figure 5. A connecting means 122, 123 pivotally connects the coupling rod 121 to each of the second number of vanes 112. Such connecting means 122, 123 translate the back-and-forth movement of the coupling rod 121 into a pivotal movement of the second number of vanes 112. As a mere example, in the middle part of each vane 112, each vane can be pivotally mounted to the vane control device 125 and/or the main body 108 of the air outlet 101, 102. Thus, each vane 112 pivots around such mounting (hinge) while the rod 121 moves back and forth.

It is to be understood that the illustrated coupling rod 121 and hinges of the vanes 112 are exemplary only. For instance, in an alternative variant, each vane 112 may be coupled to a motor (not illustrated), so that each vane 112 can be rotated to change the second direction. In this regard, each vane 112 may be associated with its own motor, so that each vane 112 can the moved individually. This facilitates a mixture of the air released by the air outlet 101, 102.

Alternatively or additionally (although not illustrated), a three-dimensional movement of each vane 112 can be achieved by a different type of hinge or more hinges holding the vane 112. In addition, a further coupling rod (not illustrated) can be provided to achieve a movement of the vanes 112 in a direction different from the back-and-forth movement of coupling rod 121. Thus, the orientation of the vanes 112 can be modified three-dimensionally.

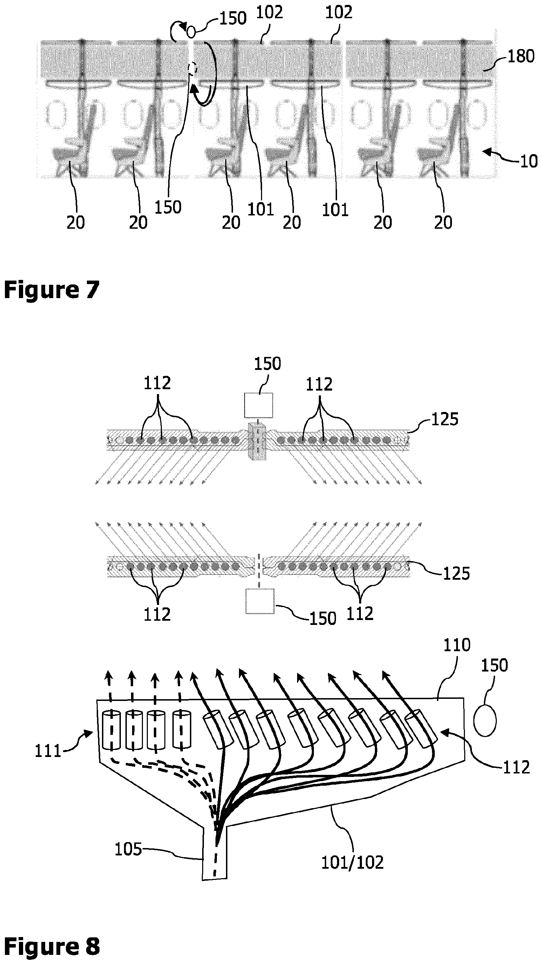

Figure 7 schematically illustrates an interior side view of an aircraft section 10. As a can be derived from this drawing, the LAOs 101 can be arranged underneath an overhead stowage compartment 180, while the CAOs 102 are arranged above the overhead stowage compartment 180. In any case, the LAOs 101 and the CAOs 102 are provided along the longitudinal direction of the aircraft and above a plurality of seat rows 20.

In addition, in order to control air quality in the aircraft cabin 10, the temperature of the air in the aircraft cabin 10 can be measured. For instance, a temperature sensor 150 can be arranged above the overhead stowage compartments 180, such as above a gap between two adjacent overhead stowage compartments 180. Such temperature sensor 150 is schematically illustrated in Figure 7 by a solid line.

Alternatively, the temperature sensor 150 can be installed between two adjacent overhead stowage compartments 180, as schematically illustrated in Figure 7 by a dashed line.

Furthermore, as illustrated in Figure 7 by curved arrows, air exiting the CAO 102 may swirl and reach the temperature sensor 150 closely after leaving the air outlet opening 110 and/or vanes 111, 112. Thus, the usually cold air provided through the riser duct 50 may be short-circuited to the temperature sensor 150, so that the measured temperature is inaccurate.

Likewise, air leaving the air outlet opening 110 of the LAO 101 may reach the gap between two adjacent overhead stowage compartments 180, where a temperature sensor 150 can likewise be arranged.

Moreover, since the LAO 101 and the CAO 102 are arranged pairwise opposite to one another, an air flow leaving straight from the LAO 101 and the CAO 102 may hit a temperature sensor 150 on the opposite side of the aircraft cabin 10. In this case, the measured temperature can be inaccurate, too.

In order to avoid such situation, Figure 8 schematically illustrates exemplary configurations of air outlets 101, 102 having a plurality of vanes 111, 112. Specifically, the vanes 111, 112 are provided in such a manner that the air flow leaving the air outlets 101, 102 point away from the temperature sensor 150, i.e. the first and second direction point away from the temperature sensor 150. In the upper portion of Figure 8, a plan view of oppositely arranged outlets 101, 102, or vane control devices 125, is provided, which show vanes 112 pointing in the second direction, each facing away from the temperature sensor 150. As a mere example, in the vicinity of a temperature sensor 150, an air outlet 101, 102, or vane control devices 125 can be provided that includes only vanes 112 pointing in a direction different from a substantially perpendicular direction, i.e. pointing in the direction different from the Y-axis.

In the lower portion of Figure 8, a plan view of another air outlet 101, 102 is shown, where a first number of vanes 111 provide a straight airflow, while a second number of vanes 112 provide an inclined airflow pointing in a direction away from the temperature sensor 150.

While the drawings illustrate the vanes 111, 112 as cylinders, through which the air can be guided, it is to be understood that any form of vane allowing to guide air can be provided. As mere examples, the vanes 111, 112 can be or can be formed by a baffle, a sheet having a wave-form, a cylinder, and/or a cuboid or the like.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A cabin air ventilation system (100) for an aircraft cabin (10), the air ventilation system comprising:
a riser duct (50) arranged along a lateral side of the aircraft cabin (10) and configured to conduct fresh air to the aircraft cabin (10); and
an air outlet (101, 102) connected to an upper end of the riser duct (50) and distributing the conducted air from the riser duct (50) in an area associated with the riser duct (50),
wherein the air outlet (101, 102) comprises:
- an inlet (105) fluidly connected to the riser duct (50),
- a main body (108) extending from the inlet (105) and having an outlet opening (110) with a larger cross-section than the inlet (105), and
- a plurality of vanes (111, 112) arranged in the outlet opening (110),
wherein a first number of vanes (111) of the plurality of vanes is oriented in a first direction and a second number of vanes (112) of the plurality of vanes is oriented in a second direction forming an angle with the first direction.

2. The cabin air ventilation system (100) of claim 1, wherein the air outlet (101, 102) further comprises:
- an actuator (120) configured to move the second number of vanes (112) to change the second direction.

3. The cabin air ventilation system (100) of claim 2, wherein the air outlet (101, 102) further comprises:
- a coupling rod (121) connected to the actuator (120), wherein the actuator (120) moves the coupling rod (121), and
- connecting means (122, 123) pivotally connecting the coupling rod (121) to each of the second number of vanes (112), wherein the connecting means (122, 123) translate a back and forth movement of the coupling rod (121) into a pivotal movement of the second number of vanes (112).

4. The cabin air ventilation system (100) of one of claims 1 to 3, wherein the plurality of vanes (111, 112) forms a baffle, a wave, a cylinder, and/or a cuboid.

5. An aircraft section (5), comprising:
a cabin air ventilation system (100) of one of claims 1 to 4.

6. The aircraft section (5) of claim 5, further comprising:
at least one first seat row (20a) arranged in an area of the aircraft section (5) where the riser duct of the cabin air ventilation system (100) is installed; and
at least one second seat row (20b) arranged in an area (AR) of the aircraft section (10) without a riser duct (50) and adjacent to the first seat row (20a).

7. The aircraft section (5) of claim 6, wherein the first direction points to the first seat row (20a) and the second direction points to the second seat row (20b).

8. The aircraft section (5) of one of claims 5 to 7, further comprising:
a temperature sensor (150) configured to measure an air temperature in the aircraft section (5),
wherein the first direction and/or the second direction points away from the temperature sensor (150).

9. The aircraft section (5) of one of claims 5 to 8, wherein the first or second direction is substantially perpendicular to a longitudinal direction of the aircraft section (5) and a vertical direction.

10. An aircraft (1), comprising:
at least one cabin air ventilation system (100) of one of claims 1 to 4; and/or
at least one aircraft section (5) of one of claims 5 to 9.
